# FASCICULE DE BREVET EUROPEEN

(11) **EP 3 639 484 B1**
(45) Date de publication et mention de la délivrance du brevet: **24.11.2021**
(21) Numéro de dépôt: 18737672.8
(22) Date de dépôt: 07.06.2018
(51) Int. Cl.: H04L 12/28, H04L 12/24

(54) **PROCÉDÉ DE CONFIGURATION D'UN DISPOSITIF DOMOTIQUE APPARTENANT À UNE INSTALLATION DOMOTIQUE**
VERFAHREN ZUM KONFIGURIEREN EINER ZU EINER DOMOTIKANLAGE GEHÖRENDEN DOMOTIKVORRICHTUNG
METHOD FOR CONFIGURING A HOME AUTOMATION DEVICE BELONGING TO A HOME AUTOMATION INSTALLATION

(30) Priorité: 14.06.2017 FR 1755376
(43) Date de publication de la demande: 22.04.2020
(73) Titulaire: Overkiz, 74370 Metz-Tessi (FR)
(72) Inventeur: POGNANT, Sylvain, 74600 Seynod (FR)
(74) Mandataire: Germain Maureau
(86) Numéro de dépôt international: PCT/FR2018/051319
(87) Numéro de publication internationale: WO 2018/229396

(56) Documents cités:
- US-A1- 2010 257 584
- US-A1- 2016 050 116
- US-A1- 2017 054 615

## Description

### Domaine de l'invention

La présente invention concerne un procédé de configuration d'au moins une unité centrale de commande ou un dispositif domotique appartenant à une installation domotique.

### Art antérieur

Une installation domotique d'un bâtiment peut comprendre un ou plusieurs dispositifs domotiques. Il est connu de procéder au contrôle, c'est à dire à la commande et/ou à la supervision de ladite installation en utilisant au moins une unité centrale de commande qui communique avec un ou plusieurs dispositifs domotiques. Une telle unité centrale de commande peut être intégrée à un dispositif domotique ou indépendante.

Un dispositif domotique doit être configuré pour permettre son interaction avec une unité centrale de commande, ou avec au moins un autre dispositif domotique de l'installation ou un service fonctionnel à distance, comme par exemple un service utilisateur.

Plusieurs configurations différentes peuvent être envisagée pour un même dispositif, ce qui implique de mettre en œuvre un procédé de configuration adapté notamment en fonction de l'unité centrale de commande ou des dispositifs ou des services à connecter, ou de procéder à une configuration in situ lors de la mise en place du dispositif dans l'installation domotique, cette configuration pouvant se révéler complexe.

Lorsqu'un dispositif doit être remplacé en raison d'une panne ou pour installer un nouveau modèle, il faut à nouveau configurer ce dispositif pour l'adapter à l'installation et permettre son fonctionnement.

La présente invention a pour but de résoudre tout ou partie des inconvénients mentionnés ci-dessus.

Le document US 2010/257584 Le document D1 décrit des techniques de configuration d'un système de réseau domestique.

### Exposé de l'invention

L'invention est définie dans la revendication 1 et ses modes de réalisation dans les revendications dépendantes de la revendication 1.L'invention concerne:
un procédé de configuration d'un deuxième dispositif domotique appartenant à une installation domotique dans le cadre d'un remplacement d'un premier dispositif domotique, le procédé étant mis en œuvre par une unité centrale de commande de l'installation domotique ou par une unité de gestion distante et comprenant les étapes suivantes :
- Enregistrement d'au moins un ensemble de données ou d'instructions de configuration associé avec un identifiant unique d'un premier dispositif domotique.
- Réception d'une demande de configuration en lien avec un identifiant du deuxième dispositif domotique ;
- Détermination d'une association entre le deuxième dispositif domotique ou son identifiant d'une part et le premier dispositif domotique ou son identifiant d'autre part ;
- Détermination d'au moins un ensemble de données ou d'instructions de configuration associé à l'identifiant du deuxième dispositif domotique à partir de l'au moins un ensemble de données ou d'instructions de configuration associé à l'identifiant unique du premier dispositif domotique ;
- Envoi d'au moins un message de configuration comprenant l'au moins un ensemble de données ou d'instructions de configuration associé à l'identifiant du deuxième dispositif domotique à destination du deuxième dispositif domotique ;

Grâce aux dispositions selon l'invention, un dispositif domotique de remplacement peut être configuré en reprenant la configuration du dispositif domotique précédent. Ce remplacement peut intervenir en cas de panne, ou en cas de remplacement par un nouveau modèle de dispositif domotique. Le dispositif domotique de remplacement peut être configuré de façon minimale et générique en usine et lors de sa distribution. Lors de la mise en service de ce dispositif domotique, la configuration adéquate, correspondant à une configuration dérivée de la configuration du premier dispositif domotique est obtenue à partir du service d'une unité centrale de commande ou d'un service de configuration exécuté par une unité de gestion distante. Ces dispositions permettent par exemple de configurer la communication avec au moins un dispositif domotique présents dans l'installation domotique, la communication avec un service utilisateur particulier pour la commande et/ou la supervision. Elles permettent également de procéder à une adaptation géographique des bandes de fréquence de communication, pour communiquer dans des bandes de fréquence autorisées en fonction de la zone géographique. Il est également possible de procéder à une configuration de l'offre fonctionnelle du dispositif domotique, ou encore à la configuration de l'interface homme-machine. La configuration peut également comprendre un téléchargement d'un composant logiciel ou d'une partie de composant logiciel à exécuter sur le dispositif domotique.

La configuration du dispositif domotique de remplacement est ainsi grandement simplifiée.

Au sens de la présente invention, un dispositif domotique est un équipement domotique et/ou un capteur, ou encore une partie d'équipement domotique ou une partie de capteur correspondant à un sous-ensemble fonctionnel. Un dispositif domotique peut également correspondre à un point de commande d'autres dispositifs domotiques.

Au sens de la présente invention, une installation est un ensemble comprenant une pluralité de dispositifs domotiques et au moins une unité centrale de commande disposés dans un seul bâtiment ou sur une pluralité de lieux, chaque dispositif domotique étant relié à une unité centrale de commande parmi la pluralité d'unités centrales de commande, la pluralité d'unités centrales de commande formant un groupe sous le contrôle d'un utilisateur. Les dispositifs électroniques forment des groupes d'au moins un dispositif domotique rattaché à une unité centrale de commande.

Au sens de la présente invention, une unité centrale de commande de l'installation domotique est une unité électronique comprenant :
- au moins une unité de traitement pour contenir et exécuter au moins un programme d'ordinateur,
- au moins un module de communication destinée au contrôle et/ou à la commande d'au moins un dispositif domotique ; et
- au moins un module de communication avec l'unité de gestion.

L'unité électronique peut être indépendante ou intégrée dans un dispositif domotique. Dans ce dernier cas, le module de communication destiné au contrôle et/ou à la commande du dispositif peut être un module de communication interne au dispositif domotique et/ou un module de communication destiné au contrôle et/ou à la commande d'autres dispositifs domotiques. Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API (pour « *Application Program Interface* » selon la terminologie anglo-saxonne).

Il est également possible que l'unité centrale de commande soit intégrée à un routeur et/ou à un modem réalisant une connexion à un réseau étendu, notamment à Internet.

Au sens de la présente invention, un service de configuration est destiné à identifier la configuration technique correcte pour le dispositif domotique ou l'unité centrale de commande considérée et à communiquer des informations de configuration à l'unité centrale de commande. Ce service peut correspondre à un service d'accès à distance ou à un service utilisateur destiné au contrôle et/ou à la commande et/ou à la supervision de l'installation domotique par un utilisateur ou par une application. Ce service peut être un service informatisé accessible à distance. Ce service peut permettre l'accès à au moins une fonction de commande ou de supervision d'une installation domotique ou d'un dispositif domotique, au moyen d'une interface utilisateur ou d'une application. L'interface utilisateur peut être accessible par une interface graphique, ou par l'intermédiaire d'une interface de programmation.

Par utilisateur, il peut être compris un utilisateur final, un installateur ou encore un opérateur de maintenance.

Selon un aspect de l'invention, l'unité de gestion exécutant le service à distance est un serveur connecté à distance à l'au moins une installation domotique, par l'intermédiaire d'un réseau étendu. Il est à noter que le terme serveur est une désignation logique qui peut recouvrir l'utilisation de plusieurs serveurs physiques pour répartir la charge de traitement informatique à réaliser.

Selon un autre aspect de l'invention, la ou les unités de gestion exécutant le premier service de configuration peut être une unité centrale destinée à être reliée à une ou plusieurs unités centrales de commande sur des réseaux privés ou locaux distincts, ou encore sur le même réseau local.

La supervision correspond de façon générale à une supervision basée sur le traitement de valeurs des variables d'état d'au moins un dispositif domotique ou une unité centrale de commande.

Au sens de la présente invention, une variable d'état est un élément descriptif de l'état d'un dispositif domotique. La valeur d'une variable d'état peut correspondre à la marche ou à l'arrêt pour un interrupteur, ou à un degré ou pourcentage d'ouverture pour un volet. Par ailleurs, une variable d'état peut correspondre à une valeur de mesure d'un capteur, par exemple à une valeur d'une grandeur physique ou d'environnement. La description des états des dispositifs peut être générique ou spécialisée, en fonction du protocole local. Les identifiants des variables d'état peuvent être numériques ou alphanumériques. Les valeurs des variables d'états peuvent utiliser des formats ou des échelles personnalisées ou propriétaires.

Au sens de la présente invention, une commande correspond à un ordre pouvant être donné à un dispositif domotique ou à une unité centrale de commande en vue de la réalisation d'une action par un dispositif ou de l'obtention en retour d'une information, par exemple d'une information relative à une variable d'état de ce dispositif.

Au sens de la présente invention, un message est un élément d'information notifié ou réceptionné via un module de communication depuis un équipement extérieur, ou sous la forme d'un appel synchrone ou asynchrone, pouvant également correspondre à un appel de fonction local ou distant.

Selon un mode de mise en œuvre, procédé comprend une étape préalable de branchement ou d'initialisation du dispositif domotique.

Ce branchement/initialisation peut être déclenché par une alimentation électrique ou par un ordre provenant dans une étape d'une instruction de l'utilisateur par une action physique sur le dispositif domotique tel qu'un appui sur un bouton ou un envoi d'instruction par l'intermédiaire d'un terminal.

Selon un aspect de l'invention, l'envoi de la demande de configuration peut correspondre à une tentative de connexion vers l'unité centrale de commande. Cette tentative de connexion identifie le dispositif domotique par un identifiant.

Selon un aspect de l'invention, dans une phase initiale ou préalable au procédé de remplacement, le dispositif domotique communique sa configuration sous forme d'au moins un ensemble de données et/ou d'instructions de configuration à l'unité centrale de commande ou au service de configuration.

Ces étapes peuvent être réalisées de façon volontaire lors d'une opération de sauvegarde réalisée à la fin de la configuration du dispositif domotique, et/ou de façon périodique avec des mises à jour des données stockées. Il est également possible que ces étapes soient éventuellement initiées avant un remplacement dans le cas d'installation d'un nouveau modèle de dispositif domotique.

L'étape de demande de configuration intervient de façon générale après qu'une panne ou une mise hors service du premier dispositif domotique intervienne. La mise hors service peut correspondre à une installation prévue d'un nouveau modèle de dispositif domotique.

L'étape de détermination d'au moins un ensemble de données ou d'instructions de configuration associé à l'identifiant du deuxième dispositif domotique à partir de l'au moins un ensemble de données ou d'instructions de configuration associé à l'identifiant unique du premier dispositif domotique peut être réalisée postérieurement ou partiellement ou totalement antérieurement à l'étape de réception d'une demande de configuration.

Selon un aspect de l'invention, l'étape de détermination d'une association entre le deuxième dispositif domotique ou de son identifiant d'une part et le premier dispositif domotique ou son identifiant d'autre part comprend une étape de vérification dans un référentiel de configuration afin de déterminer si l'identifiant du deuxième dispositif domotique est affecté.

La constatation de l'affectation de l'identifiant du deuxième dispositif domotique peut être un pré-requis pour la détermination d'au moins un ensemble de données ou d'instructions de configuration associé à l'identifiant du deuxième dispositif domotique. Dans le cas contraire, cela signifie que la demande de configuration ne peut aboutir car la demande de remplacement n'a pas été enregistrée. Il convient donc de déterminer un remplacement valide avant de poursuivre la configuration.

Selon un aspect de l'invention, la demande de configuration provient du deuxième dispositif domotique.

Selon un autre aspect de l'invention, la demande de configuration peut provenir d'un utilisateur, agissant sur l'unité centrale de commande, directement par une interface utilisateur ou par l'intermédiaire d'un terminal mobile, ou encore par l'intermédiaire du service de configuration.

Selon un aspect de l'invention, l'au moins un ensemble de données ou d'instructions de configuration associé à l'identifiant du deuxième dispositif domotique comprend au moins une donnée ou une instruction de configuration d'au moins une adresse d'émission et/ou de réception du deuxième dispositif domotique utilisée pour une interface de communication avec un troisième dispositif domotique de l'installation domotique ou l'unité centrale de commande.

Grâce à ces dispositions, la configuration d'au moins une adresse d'émission permet de communiquer directement en émission avec un dispositif domotique ou l'unité centrale de commande dont l'adresse était connue du précédent dispositif domotique et qui est reprise par le nouveau dispositif domotique.

Un dispositif domotique qui est rattaché à l'unité centrale de commande, comme par exemple une lampe, et communiquant avec l'unité centrale de commande peut stocker une adresse correspondant à l'unité centrale de commande afin par exemple de pouvoir envoyer des notifications à l'attention de ladite unité centrale de commande.

Grâce à la configuration de l'adresse de réception du nouveau dispositif domotique qui reprend l'adresse de réception du précédent dispositif domotique, une communication directe est permise entre le dispositif et l'unité centrale de commande ou d'autres dispositifs domotiques car la valeur de l'adresse de l'ancien dispositif domotique est affecté au nouveau dispositif domotique.

Selon un aspect de l'invention, l'interface de communication est attachée à la communication selon au moins un protocole de communication.

Selon un aspect de l'invention, l'étape de configuration peut comprendre plusieurs étapes de configuration de plusieurs adresses correspondant par exemple à une pluralité d'interfaces de communication utilisant une pluralité de protocoles de communications distincts.

Selon un aspect de l'invention, la ou les valeurs d'adresse font partie de l'au moins un ensemble de données ou d'instructions de configuration en provenance du premier service distant de configuration.

Selon un aspect de l'invention, l'au moins un ensemble de données ou d'instructions de configuration associé à l'identifiant du deuxième dispositif domotique comprend au moins une donnée ou une instruction de configuration d'une adresse d'émission et/ou de réception utilisée par une interface de communication d'un troisième dispositif domotique rattaché à l'unité centrale de commande de l'installation domotique, le procédé comprenant en outre l'étape suivante :
- Envoi d'au moins un message de configuration comprenant l'au au moins une donnée ou une instruction de configuration d'une adresse d'émission et/ou de réception utilisée par une interface de communication d'un troisième dispositif domotique à destination du troisième dispositif domotique ;

Grâce à ces dispositions, la configuration d'au moins une adresse d'émission dans le troisième dispositif permet au dispositif domotique de communiquer en émission avec le nouveau dispositif domotique, notamment lorsque l'adresse ne peut être conservée pour le nouveau deuxième dispositif.

Un troisième dispositif domotique qui est rattaché à l'unité centrale de commande, comme par exemple un interrupteur, et communiquant avec le premier dispositif correspondant par exemple à une lampe, peut stocker une adresse correspondant à ladite lampe afin par exemple de pouvoir envoyer des notifications à l'attention de ladite unité centrale de commande.

De la même façon, il est possible de modifier une adresse de réception pour autoriser par exemple le deuxième dispositif domotique à envoyer des commandes au troisième dispositif domotique.

Selon un aspect de l'invention, le procédé comprend en outre les étapes suivantes :
- Réception d'une demande de remplacement en relation avec un identifiant du premier dispositif domotique et une identifiant du deuxième dispositif domotique;
- Enregistrement dans un référentiel de configuration d'une association entre le premier dispositif domotique ou son identifiant d'une part et le deuxième dispositif domotique ou son identifiant d'autre part ;

Selon un aspect de l'invention la demande de remplacement provient d'un utilisateur, par exemple par l'intermédiaire d'un terminal utilisateur.

Dans le cas du remplacement par un nouveau modèle d'unité centrale de commande, la demande de remplacement peut intervenir avant la mise hors service.

Selon un aspect de l'invention, l'identifiant unique d'un dispositif domotique peut par exemple comprendre une adresse MAC ou un numéro de série. Cet identifiant peut se présenter sous la forme d'un code QR (ou QR-Code pour "Quick Reponse Code" selon la terminologie anglo-saxonne) ou autre code barre lisible de façon optique sur le dispositif ou son conditionnement, ou encore sous forme d'une étiquette d'identification radiofréquence (ou RFID pour « *Radio Frequency IDentification* » selon la terminologie anglo saxonne), une étiquette de communication en champ proche (ou NFC pour « *Near Field Communication* » selon la terminologie anglo-saxonne) ou toute autre étiquette lisible par un dispositif à disposition de l'utilisateur, comme par exemple un terminal de communication mobile.

Selon un aspect de l'invention, l'étape de détermination d'au moins un ensemble de données ou d'instructions de configuration associé à l'identifiant du deuxième dispositif domotique à partir de l'au moins un ensemble de données ou d'instructions de configuration associé à l'identifiant unique du premier dispositif domotique comprend une copie au moins partielle de l'au moins un ensemble de données ou d'instructions de configuration associé à l'identifiant du premier dispositif domotique.

Selon un aspect de l'invention, l'étape de détermination d'au moins un ensemble de données ou d'instructions de configuration associé à l'identifiant du deuxième dispositif domotique à partir de l'au moins un ensemble de données ou d'instructions de configuration associé à l'identifiant unique du premier dispositif domotique comprend une modification de format des données ou instructions de configuration ou une modification d'une structure des données ou instructions de configuration.

Grâce à ces dispositions, il est possible notamment de remplacer une première unité centrale de commande par une seconde unité centrale de commande d'un type différent du premier dispositif domotique, par exemple dans le cas d'une mise à niveau ou de l'utilisation d'un système matériel différent.

A titre d'exemple, un changement de la structure du modèle de représentation d'information calendaire peut être pris en compte : selon un premier modèle, un événement est représenté avec une récurrence hebdomadaire. Selon un deuxième modèle, un événement peut être représenté avec une récurrence exprimée en fonction de paramètres complémentaire, comme le quantième du mois ou le numéro de la semaine dans un mois. Le second modèle plus perfectionné peut exprimer l'événement exprimé selon le premier modèle, après une modification de structure. Fonctionnellement, le résultat est le même.

Les nouvelles fonctionnalités offertes par le deuxième modèle peuvent être configurées par défaut.

Selon un aspect de l'invention, l'étape de détermination d'au moins un ensemble de données ou d'instructions de configuration associé à l'identifiant du deuxième dispositif domotique à partir de l'au moins un ensemble de données ou d'instructions de configuration associé à l'identifiant unique du premier dispositif domotique comprend une adaptation des données ou instructions de configuration.

Selon un aspect de l'invention, l'adaptation de l'au moins un ensemble de données ou d'instructions de configuration concerne une adresse d'émission ou de réception ou un identifiant unique qui devrait être remplacé dans l'au moins un ensemble de données ou d'instructions de configuration.

Selon un aspect de l'invention, l'étape de détermination d'au moins un ensemble de données ou d'instructions de configuration associé à l'identifiant du deuxième dispositif domotique à partir de l'au moins un ensemble de données ou d'instructions de configuration associé à l'identifiant unique du premier dispositif domotique peut être réalisée antérieurement à l'étape de demande de configuration, après la demande de remplacement. Alternativement, ladite étape de détermination peut être réalisée postérieurement à la demande de remplacement.

Selon un aspect de l'invention, comprenant en outre l'étape suivante :
- Enregistrement de l'au moins un ensemble de données ou d'instructions de configuration associé à l'identifiant du deuxième dispositif domotique dans le référentiel de configuration ;

Selon un aspect de l'invention, le procédé comprend en outre l'étape suivante :
- Mise à jour du référentiel de configuration de façon à enregistrer le remplacement effectif du premier dispositif domotique par la deuxième unité centrale de commande.

Selon un aspect de l'invention, le procédé comprend une étape consistant à supprimer ou invalider l'enregistrement correspondant à l'ancien dispositif domotique dans le référentiel de configuration ;

Selon un aspect de l'invention, la mise à jour comprend des étapes de mise à jour des éléments qui se référaient au premier dispositif domotique pour remplacer ladite référence par une référence au deuxième dispositif domotique.

En particulier, la mise à jour peut comprendre une mise à jour d'un référentiel des installations; et/ou une mise à jour d'un référentiel des dispositifs domotiques et/ou une mise à jour d'un référentiel des scénarios.

Selon un aspect de l'invention, le procédé comprend en outre les étapes suivantes :
- Vérification de la disponibilité de l'identifiant unique du deuxième dispositif domotique auprès du référentiel de configuration ;

L'étape de vérification étant préalable à l'enregistrement de la demande de remplacement.

La constatation de la disponibilité de l'identifiant peut être un pré-requis pour l'enregistrement de la demande de remplacement. Si la disponibilité de l'identifiant unique auprès du référentiel de configuration n'est pas constatée, cela signifie que la demande d'inscription ne peut aboutir car le deuxième dispositif domotique est déjà associée à une configuration et/ou à une installation. Il convient donc de résoudre un conflit concernant cet identifiant.

Selon un aspect de l'invention, le procédé comprend en outre une étape de vérification de l'existence et des droits de l'utilisateur correspondant à l'identifiant auprès d'un référentiel utilisateur.

La constatation de la validité du compte utilisateur est un pré-requis pour la configuration ou le remplacement du dispositif domotique. Dans le cas contraire, cela signifie que la demande d'inscription ne peut aboutir car le compte utilisateur associé sur le service n'est pas valide ou n'existe pas. Il convient donc de déterminer un compte utilisateur valide sur ce service avant de poursuivre le remplacement.

Les différents aspects définis ci-dessus non incompatibles peuvent être combinés.

### Brève description des figures

L'invention sera mieux comprise à l'aide de la description détaillée qui est exposée ci-dessous en regard des dessins annexés sur lesquels :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1, une deuxième installation domotique, ainsi qu'une pluralité de serveurs destinés à être connecté aux installations domotiques ;
La figure 3 est un schéma illustrant un mode de mise en œuvre d'un procédé de configuration.
La figure 4 illustre des détails de configuration des interfaces de communication de dispositifs domotiques et d'une unité centrale de commande.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

### Description d'un système comprenant une installation domotique

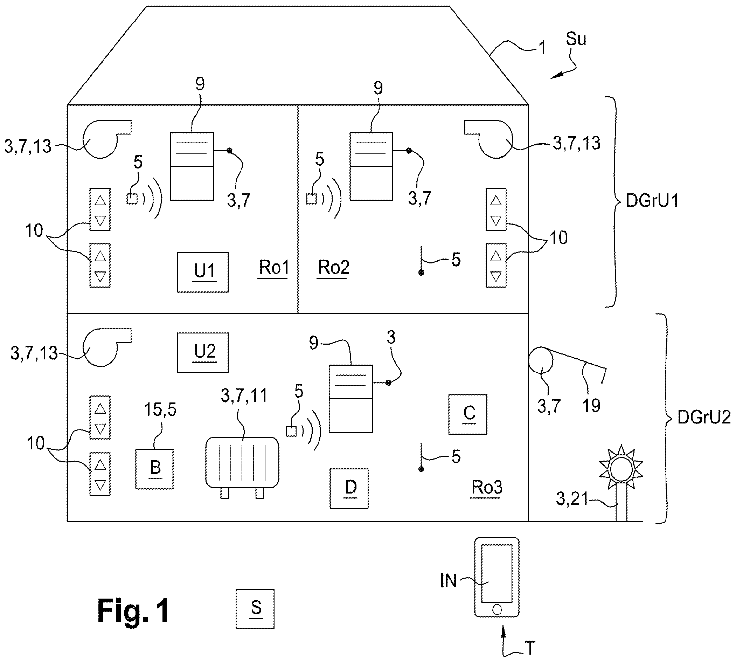

Comme illustré à la figure 1, un bâtiment 1 comprend à titre d'exemple trois pièces Ro1, Ro2, Ro3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique Su peut également comprendre un point de commande 15 d'un actionneur 7, comme un boîtier de commande B sans fil pour le volet roulant 9.

L'installation domotique Su peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence. L'installation peut encore comprendre un ou plusieurs capteurs de consommation électrique.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique Su.

Les équipements domotiques 3 et les capteurs 5 peuvent ainsi avoir accès à toute grandeur physique mesurable, comme la température de chaque pièce Ro1, Ro2, Ro3 ou un état d'un élément du bâtiment 1, comme l'état d'ouverture d'un volet roulant 9, le statut d'une alarme, etc.

Par la suite nous utiliserons la désignation de dispositif domotique ou dispositif D indifféremment pour désigner des capteurs ou des équipements domotiques, ou encore des parties d'équipements domotiques 3 ou de capteurs 5.

Les dispositifs domotiques comprennent de façon générale une unité de traitement comprenant un processeur exécutant un logiciel embarqué. Ce logiciel fait l'objet de mises à jour pour en améliorer les fonctions ou procéder à des corrections.

L'installation domotique Su comprend une unité centrale de commande ou une pluralité d'unités centrales de commande U1, U2. En particulier et à titre d'exemple, deux unités centrales de commande U1, U2 sont représentées sur la figure 1. Selon une variante, une installation domotique peut comprendre également une unité centrale de commande unique.

Chaque unité centrale de commande U1, U2 est agencée pour commander et/ou contrôler une partie des dispositifs D de l'installation Su formant un groupe DGrU1, DGrU2. A titre d'exemple, sur la figure 1, l'unité centrale de commande U1 est en charge des dispositifs D disposés dans les pièces Ro1 et Ro2 du premier étage du bâtiment, alors que l'unité centrale de commande U2 est en charge des dispositifs D disposés dans la pièce Ro3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande U1, U2 est agencée pour regrouper l'ensemble des données en provenance des dispositifs D de son groupe DGrU1, DGrU2 et pour traiter ces données.

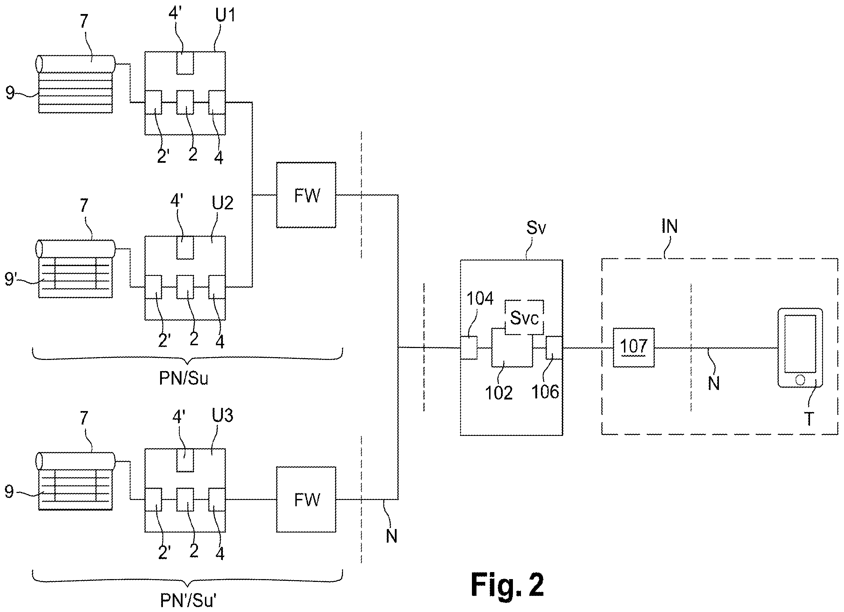

Comme cela est représenté sur la figure 2, chaque unité centrale de commande U est agencée pour communiquer avec un ou plusieurs serveurs distants Sv.

Les unités centrales de commande U1, U2, U3 sont disposées sur un réseau privé PN, PN', dont l'accès est en général protégé par un pare-feu FW. En particulier, dans l'exemple représenté sur la figure 2, deux unités centrales de commandes U1, U2 sont disposées sur un premier réseau privé correspondant à une première installation domotique, alors qu'une troisième unité centrale de commande U3 est disposée sur un deuxième réseau privé PN', indépendant du réseau privé PN correspondant à une deuxième installation domotique Su'. Le réseau privé PN est relié à un réseau étendu N, par exemple Internet. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'une mémoire vive, et d'une puce Ethernet.

L'unité de traitement exécute un logiciel embarqué. Ce logiciel fait l'objet de mises à jour pour en améliorer les fonctions ou procéder à des corrections.

L'unité centrale de commande U comprend, en outre, au moins un module de communication 2' destiné au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1, selon au moins un protocole de communication local.

A titre d'exemple, le module de communication 2' peut être agencé pour mettre en œuvre par exemple un ou plusieurs des premiers protocoles locaux P1 par exemple de type Z-Wave, EnOcean, IO Homecontrol, Somfy RTS, KNX, MODBUS, Wavenis, Philips HUE. Ces premiers protocoles locaux sont des protocoles de communication locaux en général non IP.

Selon une autre possibilité, par exemple dans le cadre de systèmes d'alarme, l'unité centrale de commande peut être intégrée dans le dispositif domotique. Selon encore une autre possibilité, Il est également possible que l'unité centrale de commande soit intégrée à un routeur et/ou à un modem réalisant une connexion à un réseau étendu, notamment à Internet.

Lorsque l'unité centrale de commande est intégrée à un dispositif domotique, le module de communication 2' destiné au contrôle et/ou à la commande du dispositif peut être un module de communication interne au dispositif domotique et/ou un module de communication destiné au contrôle et/ou à la commande d'autres dispositifs domotiques.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U peut comprendre, en outre, un module de communication 4' pour communiquer selon autre protocole de communication que le premier protocole local. Le deuxième protocole de communication peut par exemple être un protocole de communication au dessus du protocole IP sur un réseau local, ou encore un protocole générique point à point. A titre d'exemple, le protocole applicatif WEAVE utilisant des protocoles de transport 6lowpan et thread pour un réseau maillé peuvent constituer un deuxième protocole. D'autres exemples incluent Bluetooth, Zigbee ou Wifi.

Le terminal de communication T peut contenir et exécuter un logiciel d'application APP.

Chaque unité centrale de commande U comprend, en outre, un module de communication 4 avec des serveurs distants Sv1i, Sv1c, Sv2.

Le serveur Sv permet la commande et/ou le contrôle à distance et comprend une ou plusieurs unités de traitement 102 agencée pour contenir et exécuter un deuxième programme d'ordinateur.

Dans certaines applications, une unité centrale de commande U peut communiquer avec le serveur Sv à travers un serveur intermédiaire, par exemple d'un fournisseur de service tiers, dont le serveur intermédiaire offre une interface de service ou API. Le serveur Sv comprend, de son côté, au moins une interface de communication 104 destinée à la communication avec l'unité centrale U.

Le serveur Sv peut comprendre également une interface de communication 106 destinée à la communication avec une interface de commande et/ou de contrôle IN permettant à un utilisateur final Usr1 de contrôler à distance l'installation domotique, notamment par l'intermédiaire d'un service distant de configuration Svc.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T1 communiquant par le réseau étendu N. Le terminal de communication mobile T1 peut être, par exemple, un téléphone intelligent ou une tablette. Le terminal de communication mobile T1 peut être le même ou un terminal du même type que celui avec lequel l'unité centrale de commande U communique en local au moyen du module de communication 4', ou un terminal différent. Nous désignerons indifféremment ces terminaux mobiles par la référence T1. Alternativement, l'utilisateur final pourrait également faire usage d'un terminal fixe.

L'interface de commande et/ou de contrôle IN comprend un processeur qui peut être disposé au niveau du serveur web 107 et/ou du terminal de communication mobile T1.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

### Identifiant unique d'un dispositif domotique

Le serveur Sv, le service de configuration Svc ainsi que les unités centrales de commandes U peuvent utiliser un identifiant unique pour identifier les dispositifs domotiques. La structure d'un identifiant unique d'un dispositif domotique DURL va être à présent décrite de façon correspondante à un mode de réalisation particulier.

Selon ce mode de réalisation, l'identifiant unique d'un dispositif domotique comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemld si le dispositif appartient à un groupe de dispositifs D associés à une même adresse. Les dispositifs qui sont une expression unique d'une adresse ne présentent pas d'extension d'identification d'un sous-système.

Ainsi, la forme de l'identifiant unique d'un dispositif DURL peut être la suivante :
<protocol>://<gatewayld>/<rawDeviceAddress>(#<subsystemld>)

Dans laquelle les champs suivants sont présents :
protocol : identifiant du protocole local de dispositif natif;
gatewayld : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemld : ce champ optionnel indique une identification, par exemple un rang du sous-système (démarrant par exemple à 1), si un tel sous-système est présent.

### Exemples

### 1) knx://0201-0001-1234/1.1.3

Cet identifiant unique DURL correspond à un dispositif D communiquant par le protocole KNX avec une adresse individuelle 1.1.3 accessible par l'unité centrale de commande U portant l'identifiant #0201-0001-1234.

### 2) io://0201-0001-1234/145036#2

Cet identifiant unique GDURL correspond à un sous-système portant le n°2 associé à un dispositif D communiquant par le protocole io homecontrol avec une adresse radio 145036 accessible par l'unité centrale de commande U portant l'identifiant #0201-0001-1234.

### Service de configuration

Le service de configuration Svc est destiné à identifier la configuration technique correcte pour le dispositif domotique ou l'unité centrale de commande considérée et à communiquer des données et/ou instructions de configuration à l'unité centrale de commande U.

Ce service peut être un service informatisé accessible à distance, qui permet l'accès à au moins une fonction de commande ou de supervision d'une installation domotique ou d'un dispositif domotique, au moyen d'une interface utilisateur ou d'une application. L'interface utilisateur peut être accessible par une interface graphique, ou par l'intermédiaire d'une interface de programmation.

### Référentiel de configuration

L'unité centrale de commande U met en œuvre un référentiel de configuration Rf. Le référentiel de configuration Rf stocke la correspondance entre un identifiant d'un dispositif DID et des données de configuration relatives à ce dispositif Cfg. Par ailleurs, ce référentiel peut contenir un lien Lk entre un premier dispositif domotique D1 et un deuxième dispositif domotique D2 destiné à remplacer le premier. Une valeur spécifique d'initialisation FI peut également être associée à un dispositif domotique D2 pour indiquer que ce dispositif domotique doit être configuré.

Le tableau 1 ci-dessous donne un exemple d'une première structure de donnée du référentiel Rf.

**Tableau 1: Exemple de structure de donnée du référentiel Rf**

| Identifiant de dispositif domotique DID | Lien Lk | Initialisation FI | Configuration cfg |
|---|---|---|---|
| D1ID | - | N | Cfg1 |
| D2ID | D1ID | Y | Cfg2 |

A titre d'exemple, le référentiel peut être constitué par une base de données ou un service de répertoire. Ce référentiel peut être compris dans l'unité centrale de commande ou dans le premier service de configuration Svc1 ou externe et accessible par le premier service de configuration Svc1.

### Procédé de configuration

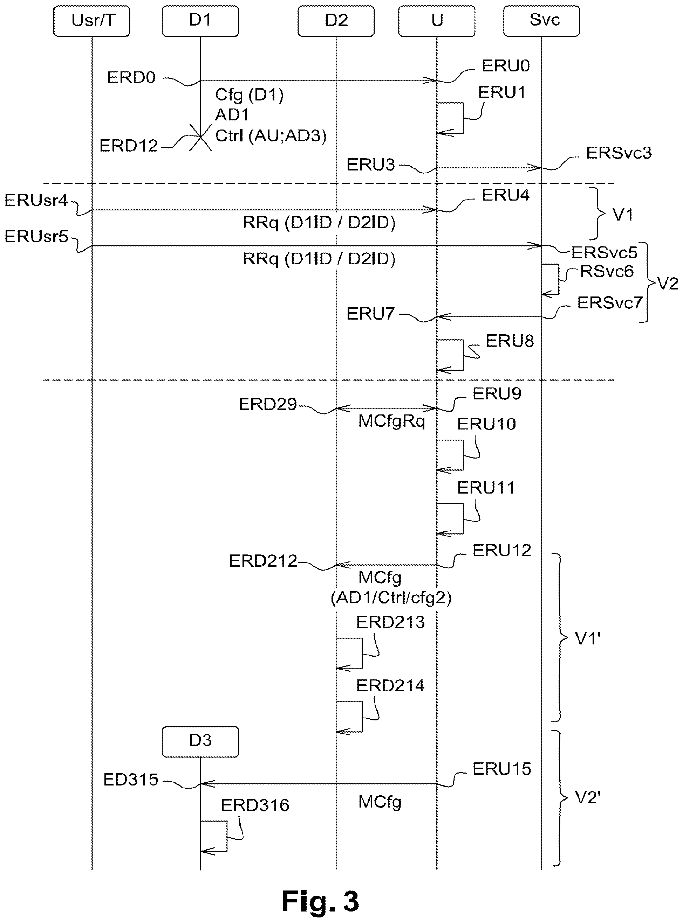

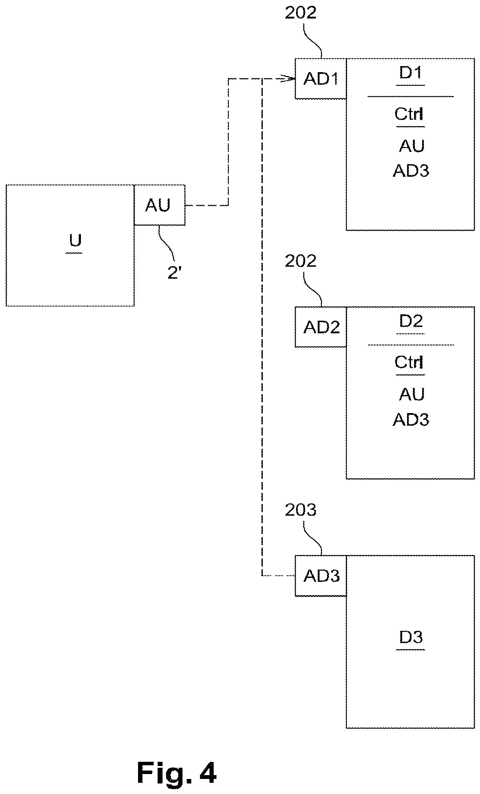

Nous allons à présent décrire un procédé de configuration dans le cadre du remplacement d'un dispositif domotique D appartenant à une installation domotique Su en référence à la figure 3. La figure 4 représente un exemple d'installation domotique dans laquelle un premier dispositif domotique D1 est appairé dans un état initial à une unité centrale de commande U. L'unité centrale de commande U présente par exemple une interface 2' destinée à la communication selon un premier protocole P₁. L'unité centrale de commande U est identifiée par une adresse AU selon le premier protocole. Le premier dispositif domotique D1 présente une interface 202 destinée à la communication selon un premier protocole P₁. Le premier dispositif domotique D1 est identifié par une adresse AD1 selon le premier protocole. Le deuxième dispositif domotique D2 présente une interface 202 destinée à la communication selon un premier protocole P₁. Le deuxième dispositif domotique D2 est identifié par une adresse AD2 selon le premier protocole. Le troisième dispositif domotique D3 présente une interface 203 destinée à la communication selon un premier protocole P₁. Le deuxième dispositif domotique D3 est identifié par une adresse AD3 selon le premier protocole.

Il est possible de considérer trois cas : un premier cas correspondant à une communication unidirectionnelle du dispositif domotique D1 vers U ; un deuxième cas correspondant à une communication unidirectionnelle de U vers D1 ; et un troisième cas de communication bidirectionnelle entre D1 et U.

Il est également possible qu'une communication entre D1 et un autre dispositif domotique D3 intervienne, de façon, par exemple à ce que D3 puisse commander D1. Ce cas de figure peut correspondre à un dispositif domotique D1 de type lampe, et à un dispositif D3 de type interrupteur. Cette configuration est visible sur la figure 4.

Dans l'exemple, le dispositif D1 comprend une table de contrôleurs, identifiant par leur adresse dans le protocole de communication P1 les dispositifs ou unités susceptibles de communiquer des commandes à D1. Dans l'exemple, cette table Ctrl comprend l'adresse AU de l'unité centrale de commande U et l'adresse AD3 du dispositif D3.

Selon une variante, la table des contrôleurs pourrait être stockée dans le dispositif domotique D3.

La configuration du premier dispositif est connue de U, notamment en ce qui concerne le contenu de la table des contrôleurs de D1.

Dans une phase préalable au procédé de remplacement correspondant à une étape ERD0 sur la figure 3, le dispositif domotique communique sa configuration cfg sous forme d'au moins un ensemble de données et/ou d'instructions de configuration à l'unité centrale de commande U qui reçoit cet au moins un ensemble dans une étape ERU0. Dans une étape ERU1, l'unité centrale de commande U stocke ladite configuration dans un référentiel de configuration Rf, en lien avec un identifiant unique d'unité centrale de commande.

Ces étapes peuvent être réalisées de façon volontaire lors d'une opération de sauvegarde réalisée à la fin de la configuration du premier dispositif domotique D1, et/ou de façon périodique avec des mises à jour des données stockées. Il est également possible que ces étapes soient éventuellement initiées avant un remplacement dans le cas d'installation d'une nouvelle version (ou « upgrade » selon la terminologie anglo-saxonne).

En particulier, l'au moins un ensemble de données et/ou d'instructions de configuration peut comprendre l'adresse AD1 du dispositif D1 selon un protocole de communication P1, et/ou la table des contrôleurs Ctrl du dispositif D1.

L'unité centrale de commande U peut, selon une possibilité, communiquer tout ou partie de cet ensemble, ou un ensemble de données ou d'instruction de configuration dérivé de cet ensemble dans une étape ERU3 à destination du service de configuration Svc, qui le reçoit dans une étape ERSvc3.

Alternativement à l'étape ERD0, la configuration du dispositif domotique peut être connue de l'unité centrale de commande U car cette configuration est imposée par ladite unité centrale de commande, ou entrée par un utilisateur, ou encore déterminée au moins partiellement à partir de données fournies par le service de configuration en fonction du type de dispositif considéré.

Nous supposerons, comme indiqué sur la figure 3 à l'étape ERD12 qu'une panne ou une mise hors service du premier dispositif domotique D1 intervient. La mise hors service peut correspondre à une installation prévue d'un nouveau modèle de dispositif domotique D2.

L'utilisateur Usr procède ensuite à un remplacement du dispositif domotique D1 par un nouveau dispositif domotique D2.

Selon une première possibilité V1, dans une étape ERUsr4, l'utilisateur émet, par exemple par l'intermédiaire d'un terminal utilisateur T ou par une interface présente sur l'unité centrale de commande U, une demande de remplacement RRq à destination de l'unité centrale de commande U qui la reçoit dans une étape ERU4. Cette demande contient l'identifiant D1ID de l'ancien dispositif et l'identifiant D2ID du nouveau dispositif domotique D2 de remplacement.

Selon une deuxième possibilité V2, Dans une étape ERUsr5, l'utilisateur émet, par exemple par l'intermédiaire d'un terminal utilisateur T, une demande de remplacement RRq à destination du service distant Svc qui la reçoit dans une étape ERSvc5. Cette demande contient l'identifiant D1ID de l'ancien dispositif domotique et l'identifiant D2ID du nouveau dispositif domotique.

Le service de configuration Svc peut enregistrer la demande de remplacement dans une étape ERSvc6, après avoir vérifié optionnellement l'existence et éventuellement demander un élément d'authentification de l'utilisateur comme un mot de passe. Le service peut ensuite préparer et envoyer, dans une étape ERSvc7 une demande de remplacement à l'unité centrale de commande, sur la base des éléments communiqués par l'utilisateur, et en fournissant éventuellement des données ou instructions de configuration complémentaires. La demande de remplacement est dans ce cas reçue dans une étape ERU7.

Dans le cas du remplacement par un nouveau modèle de dispositif domotique, la demande de remplacement peut intervenir avant la mise hors service.

A titre d'exemple, l'identifiant communiqué par l'utilisateur pour le dispositif domotique de remplacement D2 peut être une adresse ou un identifiant permettant la découverte selon le protocole de communication P1 considéré.

Dans une étape ERU8 l'unité centrale de commande procède à un enregistrement dans le référentiel de configuration Rf de l'identifiant du deuxième dispositif domotique de remplacement D2, en lien Lk avec le premier dispositif domotique D1 à remplacer, afin de définir l'association entre le premier dispositif domotique D1 ou son identifiant D1ID d'une part et le deuxième dispositif domotique D2 ou son identifiant D2ID d'autre part. Une valeur spécifique d'initialisation FI peut également être associée au deuxième dispositif domotique D2 pour indiquer que ce deuxième dispositif domotique D2 doit être configuré.

A ce stade, dans l'étape ERU8, l'unité centrale de commande U peut déterminer tout ou partie d'au moins un ensemble de données ou d'instructions de configuration cfg2 associé à l'identifiant du deuxième dispositif domotique D2 en vue de stocker cet ensemble dans le référentiel de configuration Rf. Les étapes de détermination sont détaillées ultérieurement en référence à l'étape ERU11.

Par la suite, il est procédé à un branchement ou à une initialisation du deuxième dispositif domotique D2. Ce branchement/initialisation peut être déclenché par une alimentation électrique ou par un ordre provenant d'une instruction de l'utilisateur par une action physique sur le deuxième dispositif domotique D2 tel qu'un appui sur un bouton ou un envoi d'instruction par l'intermédiaire d'un terminal T.

Dans le cadre de ce branchement ou suite à cette initialisation, un appairage ou une tentative de communication intervient entre le deuxième dispositif domotique et l'unité centrale de commande U, représentée par l'étape ERD29/ERU9.

Le deuxième dispositif domotique D2 peut également envoyer une demande de configuration MCfgRq à l'unité centrale de commande U.

Cette demande de configuration MCfgRq identifie le deuxième dispositif domotique D2 par un identifiant D2ID. Cette demande de configuration peut correspondre à une simple tentative de connexion. Bien entendu, plusieurs étapes successives peuvent être réalisées correspondant à l'établissement d'une communication, puis à la demande de configuration. Alternativement, la demande de configuration peut être à l'initiative d'un utilisateur qui agit sur l'unité centrale de commande, directement par une interface utilisateur ou par l'intermédiaire d'un terminal mobile, ou encore par l'intermédiaire du service de configuration Svc.

Suite à l'identification d'une demande de configuration, l'unité centrale de commande procède à une vérification dans le référentiel de configuration Rf afin de déterminer si l'identifiant D2ID est bien affecté, et quelles sont les données associées. Suite à cette vérification, une ou plusieurs étapes de configuration sont réalisées par l'unité centrale de commande représentées collectivement sur la figure 3 par l'étape ERU10. En particulier, ces étapes consistent à supprimer ou invalider l'enregistrement correspondant à l'ancien dispositif domotique D1 ;

Ces étapes comprennent également les étapes consistant à mettre à jour les éléments qui se référaient à D1 pour remplacer par une référence à D2. Par exemple : mettre à jour un référentiel des dispositifs domotiques D ; en particulier DURL ; ou mettre à jour un référentiel des scénarios de commande ;

La valeur spécifique d'initialisation Fl associée au deuxième dispositif de commande peut être mise à jour pour indiquer que ce dispositif de commande est configuré.

Dans une étape ERU11, l'unité centrale de commande U procède à la détermination et/ou à la collecte de l'au moins un ensemble de données ou d'instructions de configuration cfg2 associé à l'identifiant du deuxième dispositif domotique D2 à partir notamment de l'au moins un ensemble de données ou d'instructions de configuration cfg1 associé à l'identifiant du premier dispositif domotique D1 et compris dans le référentiel de configuration.

Cette étape de détermination peut comprendre une copie partielle ou complète de l'au moins un ensemble de données ou d'instructions de configuration cfg1 associé à l'identifiant du premier dispositif domotique D1.

Cette étape peut éventuellement comprendre une étape de conversion de la configuration cfg1 si le dispositif domotique D2 n'est pas du même type que le dispositif domotique D1, par exemple dans le cas d'une mise à niveau ou de l'utilisation d'un système matériel différent. Il est également possible de procéder à des adaptations de la configuration, par exemple lorsqu'une adresse ou un identifiant unique devrait être remplacé dans la configuration cfg2.

Tout ou partie des étapes de détermination peuvent être réalisée précédemment lors de l'étape ERU8, l'étape ERU11 pouvant se limiter à une collecte de l'ensemble de données ou d'instructions de configuration cfg2 disponible dans le référentiel de configuration Rf.

Selon une première possibilité V1', L'unité centrale de commande U peut ensuite envoyer un ou plusieurs messages de configuration MCfg dans une étape ERU12 qui sont reçus par le deuxième dispositif domotique D2 dans une étape ERD212. L'au moins un message de configuration Mcfg à destination de D2 peut contenir un ensemble comprenant au moins une donnée ou une instruction de configuration cfg2 dérivée d'au moins une donnée ou une instruction de configuration cfg1 relative au dispositif domotique D1.

Cet ensemble de données ou d'instructions de configuration cfg2 peut comprendre en particulier une adresse correspondant à l'adresse du précédent dispositif domotique AD1, et éventuellement des valeurs correspondant à la table de contrôleur Ctrl du dispositif domotique D1.

Dans une étape ERD213 et ERD214, le deuxième dispositif domotique D2 procède à sa configuration sur la base des informations reçues de l'unité centrale de commande U dans le message MCfg.

En particulier, cette configuration peut concerner la modification des adresses d'émission et de réception de D2, dans la mesure où une telle adresse est modifiable selon le protocole P1 utilisé.

Ainsi, l'étape ERD213 peut correspondre à une affectation de la valeur de l'adresse du précédent dispositif domotique AD1 à l'adresse AD2 du deuxième dispositif domotique.

L'étape ERD214 peut correspondre à une affectation des valeurs de la table des contrôleurs du premier dispositif domotique D1, qui comprenait par exemple les adresses AU de l'unité centrale de commande et AD3 du troisième dispositif dans la table des contrôleurs Ctrl du deuxième dispositif domotique D2.

Grâce à ces dispositions, la communication entre l'unité centrale U et le dispositif domotique D2 d'une part, et le dispositif domotique D2 et le dispositif domotique D3 d'autre part est permise.

Selon une deuxième possibilité V2' qui peut être cumulée ou alternative avec la première, il peut être souhaitable de modifier la configuration d'autres dispositifs de l'installation communiquant avec D1. A titre d'exemple, cette variante correspond à un cas dans lequel le dispositif domotique D2 de remplacement possède une adresse dans le protocole P1 qui n'est pas modifiable ou qu'il est préférable de conserver cette adresse.

Ainsi, dans l'étape ERU15, l'unité centrale de commande U envoie un message de configuration Mcfg à destination de D3 contenant un ensemble comprenant au moins une donnée ou une instruction de configuration cfg3. A titre d'exemple, l'ensemble peut comprendre une adresse correspondant à l'adresse du dispositif domotique AD2 de façon à modifier dans D3, dans la table des contrôleurs de D3 l'adresse AD1 en une adresse AD2. Le message est reçu par le dispositif D3 dans une étape ED315.

Dans une étape ERD316, le dispositif domotique D3 procède à une modification dans une table des contrôleurs de l'adresse AD1 en une adresse AD2. L'ensemble de la table peut éventuellement être modifiée.

Selon une variante de la présente invention, le procédé peut être exécuté sur l'unité de gestion en lieu et place de l'unité centrale de commande, qui agit dans ce cas comme une simple passerelle. Dans ce cas, le référentiel de configuration peut être stocké ou accessible depuis l'unité de gestion.

## Revendications

1. Procédé de configuration d'un deuxième dispositif domotique (D2) appartenant à une installation domotique (Su) dans le cadre d'un remplacement d'un premier dispositif domotique (D1), le procédé étant mis en œuvre par une unité centrale de commande (U) de l'installation domotique (Su) comprenant au moins une unité de traitement pour contenir et exécuter au moins un programme d'ordinateur, au moins un module de communication destinée au contrôle et/ou à la commande d'au moins un dispositif domotique et au moins un module de communication avec l'unité de gestion ou par une unité de gestion distante (Sv) et comprenant les étapes suivantes :
- Enregistrement (ERU1) d'au moins un ensemble de données ou d'instructions de configuration (cfg1) associé avec un identifiant unique d'un premier dispositif domotique (D1).
- Réception (ERU9) d'une demande de configuration (MCfgRq) en lien avec un identifiant du deuxième dispositif domotique (D2) ;
- Détermination (ERU10) d'une association entre le deuxième dispositif domotique (D2) ou son identifiant (D2ID) d'une part et le premier dispositif domotique (D1) ou son identifiant (D1ID) d'autre part ;
- Détermination (ERU11) d'au moins un ensemble de données ou d'instructions de configuration (cfg2) associé à l'identifiant du deuxième dispositif domotique (D2) à partir de l'au moins un ensemble de données ou d'instructions de configuration (cfg1) associé à l'identifiant unique du premier dispositif domotique (D1) ; Envoi (ERU12) d'au moins un message de configuration (MCfg) comprenant l'au moins un ensemble de données ou d'instructions de configuration (cfg2) associé à l'identifiant du deuxième dispositif domotique (D2) à destination du deuxième dispositif domotique (D2).

2. Procédé selon la revendication 1, dans lequel l'au moins un ensemble de données ou d'instructions de configuration (cfg2) associé à l'identifiant du deuxième dispositif domotique (D2) comprend au moins une donnée ou une instruction de configuration d'au moins une adresse (AU, AD3) d'émission et/ou de réception du deuxième dispositif domotique (D2) utilisée pour une interface de communication (202) avec un troisième dispositif domotique (D3) de l'installation domotique (Su) ou l'unité centrale de commande (U).

3. Procédé selon l'une des revendications 1 ou 2, dans lequel l'au moins un ensemble de données ou d'instructions de configuration (cfg2) associé à l'identifiant du deuxième dispositif domotique (D2) comprend au moins une donnée ou une instruction de configuration d'une adresse d'émission et/ou de réception utilisée par une interface de communication d'un troisième dispositif domotique (D3) rattaché à l'unité centrale de commande (U) de l'installation domotique (Su), le procédé comprenant en outre l'étape suivante :
- Envoi (ERU15) d'au moins un message de configuration (MCfg) comprenant l'au moins une donnée ou une instruction de configuration d'une adresse d'émission et/ou de réception utilisée par une interface de communication d'un troisième dispositif domotique (D3) à destination du troisième dispositif domotique (D3) ;

4. Procédé selon l'une des revendications 1 à 3, comprenant en outre les étapes suivantes :
- Réception d'une demande de remplacement (ERU4, ERU7) en relation avec un identifiant (D1ID) du premier dispositif domotique (D1) et une identifiant (D2ID) du deuxième dispositif domotique (D2);
- Enregistrement (ERU8) dans un référentiel de configuration (Rf) d'une association entre le premier dispositif domotique (D1) ou son identifiant (D1ID) d'une part et le deuxième dispositif domotique (D2) ou son identifiant (D2ID) d'autre part ;

5. Procédé selon l'une des revendications 1 à 4, dans lequel l'étape de détermination (ERU10) d'au moins un ensemble de données ou d'instructions de configuration (cfg2) associé à l'identifiant du deuxième dispositif domotique (U) à partir de l'au moins un ensemble de données ou d'instructions de configuration (cfg1) associé à l'identifiant unique du premier dispositif domotique (D1) comprend une copie au moins partielle de l'au moins un ensemble de données ou d'instructions de configuration associé à l'identifiant du premier dispositif domotique (cfg1).

6. Procédé selon l'une des revendications 1 à 5, dans lequel l'étape de détermination (ERU10) d'au moins un ensemble de données ou d'instructions de configuration (cfg2) associé à l'identifiant du deuxième dispositif domotique (U) à partir de l'au moins un ensemble de données ou d'instructions de configuration (cfg1) associé à l'identifiant unique du premier dispositif domotique (D1) comprend une modification de format des données ou instructions de configuration (cfg1) ou une modification d'une structure des données ou instructions de configuration (cfg1).

7. Procédé selon l'une des revendications 1 à 6, dans lequel l'étape de détermination (ERU10) d'au moins un ensemble de données ou d'instructions de configuration (cfg2) associé à l'identifiant du deuxième dispositif domotique (D2) à partir de l'au moins un ensemble de données ou d'instructions de configuration (cfg1) associé à l'identifiant unique du premier dispositif domotique (D1) comprend une adaptation des données ou instructions de configuration (cfg1).

8. Procédé selon l'une des revendications 1 à 7, comprenant en outre l'étape suivante :
- Enregistrement (ERU8) de l'au moins un ensemble de données ou d'instructions de configuration (cfg2) associé à l'identifiant du deuxième dispositif domotique (D2) dans le référentiel de configuration (Rf) ;

9. Procédé selon l'une des revendications 1 à 8, comprenant en outre l'étape suivante :
- Mise à jour (ERU11) du référentiel de configuration de façon à enregistrer le remplacement effectif du premier dispositif domotique (D1) par la deuxième unité centrale de commande (D2).

10. Procédé selon l'une des revendications 4 à 9, comprenant en outre les étapes suivantes :
- Vérification (ERSvc4) de la disponibilité de l'identifiant unique (D2ID) du deuxième dispositif domotique (D2) auprès du référentiel de configuration (Rf1) ;
L'étape de vérification étant préalable à l'enregistrement de la demande de remplacement.

## Patentansprüche

1. Verfahren zum Konfigurieren einer zweiten zu einer Domotikanlage (Su) gehörenden Domotikvorrichtung (D2) im Rahmen eines Austausches einer ersten Domotikvorrichtung (D1), wobei das Verfahren durch eine zentrale Steuerungseinheit (U) der Domotikanlage (Su) ausgeführt wird, die mindestens eine Verarbeitungseinheit umfasst, um mindestens ein Computerprogramm zu enthalten und auszuführen, mindestens ein Kommunikationsmodul, das zur Kontrolle und/ oder Steuerung mindestens einer Domotikvorrichtung bestimmt ist, und mindestens ein Kommunikationsmodul mit der Verwaltungseinheit oder durch eine entfernte Verwaltungseinheit (Sv) und die folgenden Schritte umfassend:
- Speichern (ERU1) mindestens einer Reihe von Konfigurationsdaten oder -anweisungen (cfg1), die einer eindeutigen Kennung einer ersten Domotikvorrichtung (D1) zugeordnet ist.
- Empfangen (ERU9) einer Konfigurationsanfrage (MCfgRq) in Verbindung mit einer Kennung der zweiten Domotikvorrichtung (D2);
- Bestimmen (ERU10) einer Zuordnung zwischen der zweiten Domotikvorrichtung (D2) oder deren Kennung (D2ID) einerseits, und der ersten Domotikvorrichtung (D1) oder deren Kennung (D1ID) andererseits;
- Bestimmen (ERU11) mindestens einer Reihe von Konfigurationsdaten oder -anweisungen (cfg2), die einer eindeutigen Kennung einer zweiten Domotikvorrichtung (D2) zugeordnet ist, aus der mindestens einen Reihe von Konfigurationsdaten oder -anweisungen (cfg1), die der eindeutigen Kennung der ersten Domotikvorrichtung (D1) zugeordnet ist;
- Senden (ERU12) mindestens einer Konfigurationsnachricht (MCfg), umfassend mindestens eine Reihe von Konfigurationsdaten oder -anweisungen (cfg2), die der Kennung der zweiten Domotikvorrichtung (D2) zugeordnet ist, an die zweite Domotikvorrichtung (D2).

2. Verfahren nach Anspruch 1, wobei die mindestens eine Reihe von Konfigurationsdaten oder -anweisungen (cfg2), die der Kennung der zweiten Domotikvorrichtung (D2) zugeordnet ist, mindestens ein(e) Konfigurationsdatum oder -anweisung mindestens einer Sende- und/ oder Empfangsadresse (AU, AD3) der zweiten Domotikvorrichtung (D2) umfasst, die für eine Kommunikationsschnittstelle (202) mit einer dritten Domotikvorrichtung (D3) der Domotikanlage (Su) oder der zentralen Steuerungseinheit (U) verwendet wird.

3. Verfahren nach einem der Ansprüche 1 oder 2, wobei die mindestens eine Reihe von Konfigurationsdaten oder -anweisungen (cfg2), die der Kennung der zweiten Domotikvorrichtung (D2) zugeordnet ist, mindestens ein(e) Konfigurationsdatum oder -anweisung mindestens einer Sende- und/ oder Empfangsadresse der zweiten Domotikvorrichtung (D2) umfasst, die von einer Kommunikationsschnittstelle einer dritten Domotikvorrichtung (D3) verwendet wird, die an der zentralen Steuerungseinheit (U) der Domotikanlage (Su) angehängt ist, wobei das Verfahren weiter den folgenden Schritt umfasst:
- Senden (ERU15) mindestens einer Konfigurationsnachricht (MCfg), umfassend mindestens ein(e) Konfigurationsdatum oder -anweisung mindestens einer Sende- und/ oder Empfangsadresse, die von einer Kommunikationsschnittstelle einer dritten Domotikvorrichtung (D3) verwendet wird, an die dritte Domotikvorrichtung (D3);

4. Verfahren nach einem der Ansprüche 1 bis 3, weiter die folgenden Schritte umfassend:
- Empfangen einer Austauschanfrage (ERU4, ERU7) in Verbindung mit einer Kennung (D1ID) der ersten Domotikvorrichtung (D1) und einer Kennung (D2ID) der zweiten Domotikvorrichtung (D2);
- Speichern (ERU8) in einem Konfigurationsbezugssystem (Rf) einer Zuordnung zwischen der ersten Domotikvorrichtung (D1) oder deren Kennung (D1ID) einerseits, und der zweiten Domotikvorrichtung (D2) oder deren Kennung (D2ID) andererseits;

5. Verfahren nach einem der Ansprüche 1 bis 4, wobei der Schritt des Bestimmens (ERU10) mindestens einer Reihe von Konfigurationsdaten oder - anweisungen (cfg2), die der Kennung der zweiten Domotikvorrichtung (U) zugeordnet ist, aus der mindestens einen Reihe von Konfigurationsdaten oder - anweisungen (cfg1), die der eindeutigen Kennung der ersten Domotikvorrichtung (D1) zugeordnet ist, mindestens eine Teilkopie der mindestens einen Reihe von Konfigurationsdaten oder -anweisungen umfasst, die der Kennung der ersten Domotikvorrichtung (cfg1) zugeordnet ist.

6. Verfahren nach einem der Ansprüche 1 bis 5, wobei der Schritt des Bestimmens (ERU10) mindestens einer Reihe von Konfigurationsdaten oder - anweisungen (cfg2), die der Kennung der zweiten Domotikvorrichtung (U) zugeordnet ist, aus der mindestens einen Reihe von Konfigurationsdaten oder - anweisungen (cfg1), die der eindeutigen Kennung der ersten Domotikvorrichtung (D1) zugeordnet ist, eine Formatänderung der Konfigurationsdaten oder - anweisungen (cfg1) oder eine Änderung einer Struktur der Konfigurationsdaten oder -anweisungen (cfg1) umfasst.

7. Verfahren nach einem der Ansprüche 1 bis 6, wobei der Schritt des Bestimmens (ERU10) mindestens einer Reihe von Konfigurationsdaten oder - anweisungen (cfg2), die der Kennung der zweiten Domotikvorrichtung (D2) zugeordnet ist, aus der mindestens einen Reihe von Konfigurationsdaten oder - anweisungen (cfg1), die der eindeutigen Kennung der ersten Domotikvorrichtung (D1) zugeordnet ist, eine Anpassung der Konfigurationsdaten oder - anweisungen (cfg1) umfasst.

8. Verfahren nach einem der Ansprüche 1 bis 7, weiter den folgenden Schritt umfassend:
- Speichern (ERU8) der mindestens einen Reihe von Konfigurationsdaten oder -anweisungen (cfg2), die der Kennung der zweiten Domotikvorrichtung (D2) zugeordnet ist, in dem Konfigurationsbezugssystem (Rf);

9. Verfahren nach einem der Ansprüche 1 bis 8, weiter den folgenden Schritt umfassend:
- Aktualisieren (ERU11) des Konfigurationsbezugssystems derart, um den tatsächlichen Austausch der ersten Domotikvorrichtung (D1) durch die zweite zentrale Steuerungseinheit (D2) zu speichern.

10. Verfahren nach einem der Ansprüche 4 bis 9, weiter die folgenden Schritte umfassend:
- Überprüfen (ERSvc4) der Verfügbarkeit der eindeutigen Kennung (D2ID) der zweiten Domotikvorrichtung (D2) im Konfigurationsbezugssystem (Rf1);
wobei der Schritt des Überprüfens vor dem Speichern der Austauschanfrage erfolgt.

## Claims

1. A method for configuring a second home automation device (D2) belonging to a home automation installation (Su) as part of a replacement of a first home automation device (D1), the method being implemented by a central control unit (U) of the home automation installation (Su) comprising at least one processing unit for containing and executing at least one computer program, at least one communication module intended for monitoring and/or control of at least one home automation device and at least one module for communication with the management unit or by a remote management unit (Sv) and comprising the following steps:
- recording (ERU1) at least one set of data or configuration instructions (cfg1) associated with a unique identifier of a first home automation device (D1).
- receiving (ERU9) a configuration request (MCfgRq) related to an identifier of the second home automation device (D2);
- determining (ERU10) an association between the second home automation device (D2) or its identifier (D2ID) on the one hand and the first home automation device (D1) or its identifier (D1ID) on the other hand;
- determining (ERU11) at least one set of configuration data or instructions (cfg2) associated with the identifier of the second home automation device (D2) from at least one set of configuration data or instructions (cfg1) associated with the unique identifier of the first home automation device (D1);
- sending (ERU12) at least one configuration message (MCfg) comprising at least one set of configuration data or instructions (cfg2) associated with the identifier of the second home automation device (D2) to the second home automation device (D2).

2. The method according to claim 1, wherein the at least one set of configuration data or instructions (cfg2) associated with the identifier of the second home automation device (D2) comprises at least one configuration datum or instruction of at least one emission and/or reception address (AU, AD3) of the second home automation device (D2) used for a communication interface (202) with a third home automation device (D3) of the home automation installation (Su) or the central control unit (U).

3. The method according to any of claims 1 or 2, wherein the at least one set of configuration data or instructions (cfg2) associated with the identifier of the second home automation device (D2) comprises at least one configuration datum or instruction of an emission and/or reception address used by a communication interface of a third home automation device (D3) connected to the central control unit (U) of the home automation installation (Su), the method further comprising the following step:
- sending (ERU15) at least one configuration message (MCfg) comprising the at least one configuration datum or instruction of an emission and/or reception address used by a communication interface of a third device home automation (D3) to the third home automation device (D3);

4. The method according to any of claims 1 to 3, further comprising the following steps:
- receiving a replacement request (ERU4, ERU7) relating to an identifier (D1ID) of the first home automation device (D1) and an identifier (D2ID) of the second home automation device (D2);
- recording (ERU8) in a configuration repository (Rf) an association between the first home automation device (D1) or its identifier (D1ID) on the one hand and the second home automation device (D2) or its identifier (D2ID) on the other hand.

5. The method according to any of claims 1 to 4, wherein the step of determining (ERU10) at least one set of configuration data or instructions (cfg2) associated with the identifier of the second home automation device (U) from the at least one set of configuration data or instructions (cfg1) associated with the unique identifier of the first home automation device (D1) comprises an at least partial copy of the at least one set of configuration data or instructions associated with the identifier of the first home automation device (cfg1).

6. The method according to any of claims 1 to 5, wherein the step of determining (ERU10) at least one set of configuration data or instructions (cfg2) associated with the identifier of the second home automation device (U) from the at least one set of configuration data or instructions (cfg1) associated with the unique identifier of the first home automation device (D1) comprises a modification of a format of the configuration data or instructions (cfg1) or a modification of a structure of the configuration data or instructions (cfg1).

7. The method according to any of claims 1 to 6, wherein the step of determining (ERU10) at least one set of configuration data or instructions (cfg2) associated with the identifier of the second home automation device (D2) from the at least one set of data or configuration data or instructions (cfg1) associated with the unique identifier of the first home automation device (D1) comprises an adaptation of the configuration data or instructions (cfg1).

8. The method according to any of claims 1 to 7, further comprising the following step:
- recording (ERU8) the at least one set of configuration data or instructions (cfg2) associated with the identifier of the second home automation device (D2) in the configuration repository (Rf);

9. The method according to any of claims 1 to 8, further comprising the following step:
- updating (ERU11) the configuration repository so as to record the actual replacement of the first home automation device (D1) by the second central control unit (D2).

10. The method according to any of claims 4 to 9, further comprising the following steps:
- verifying (ERSvc4) the availability of the unique identifier (D2ID) of the second home automation device (D2) within the configuration repository (Rf1);
The verification step being prior to the recording of the replacement request.
